(19) Europäisches Patentamt
European Patent Office
Office européen des brevets

(11) **EP 2 845 017 B1**

(12) **EUROPÄISCHE PATENTSCHRIFT**

(45) Veröffentlichungstag und Bekanntmachung des Hinweises auf die Patenterteilung:
**13.09.2017 Patentblatt 2017/37**

(21) Anmeldenummer: **13732814.2**

(22) Anmeldetag: **24.04.2013**

(51) Int Cl.:
*H02K 15/00* (2006.01)    *H02K 15/06* (2006.01)
*H02K 15/08* (2006.01)    *H02K 3/28* (2006.01)

(86) Internationale Anmeldenummer:
**PCT/DE2013/100152**

(87) Internationale Veröffentlichungsnummer:
**WO 2013/163990 (07.11.2013 Gazette 2013/45)**

(54) **WECHSELSTROMWICKLUNG FÜR EINE ROTIERENDE ELEKTRISCHE MASCHINE UND VERFAHREN ZU IHRER HERSTELLUNG AUS RUNDDRÄHTEN**

ALTERNATING CURRENT WINDING FOR A ROTATING ELECTRICAL MACHINE AND METHOD FOR PRODUCTION THEREOF FROM ROUND WIRES

ENROULEMENT À COURANT ALTERNATIF POUR UNE MACHINE ÉLECTRIQUE TOURNANTE ET SON PROCÉDÉ DE PRODUCTION À PARTIR DE FILS DE SECTION CIRCULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2012 DE 102012103941**

(43) Veröffentlichungstag der Anmeldung:
**11.03.2015 Patentblatt 2015/11**

(73) Patentinhaber: **Antriebstechnik Katt Hessen GmbH**
**34576 Homberg/Efze (DE)**

(72) Erfinder: **KÖHRING, Pierre**
**01067 Dresden (DE)**

(74) Vertreter: **Drechsler, Gottfried**
**Ilberg & Weissfloh**
**Patentanwälte**
**Prellerstrasse 26**
**01309 Dresden (DE)**

(56) Entgegenhaltungen:
**DE-A1- 1 488 676**    **DE-C- 427 006**
**GB-A- 1 219 875**

**Beschreibung**

Die Erfindung betrifft eine Wechselstromwicklung für eine rotierende elektrische Maschine und ein Verfahren zu ihrer Herstellung aus Runddrähten mit einer Träufel- oder Einziehwicklung.

Es ist allgemein bekannt, dass sich Runddrahtwicklungen für Niederspannungsmaschinen mit sehr geringem Aufwand und damit relativ kostengünstig herstellen lassen. Zudem können derartige Träufel- oder Einziehwicklungen mit geringem Aufwand sowohl im Drahtdurchmesser als auch in der Windungszahl variiert werden. Das gewährleistet eine problemlose Anpassung der Maschinenspannung an die jeweils erforderlichen Einsatzbedingungen. Diese Vorteile müssen durch den Umstand erkauft werden, dass die Teilleiter der Wicklung sich nahezu zufällig über den Nutquerschnitt verteilen. Dies führt insbesondere bei großen Leistungen (>200kW) zu dem Problem der Stromverdrängung 1. Ordnung. Diese Art der Stromverdrängung ist gekennzeichnet durch die Ausbildung von Schleifenströmen innerhalb parallel geschalteter Teile der Wicklung. Diese Schleifenströme stellen vor allem mit steigender Leistung und/oder steigender Frequenz ein erhebliches technisches Problem dar. Die Auswirkungen der Stromverdrängung in der Nut sind deutlich höhere Stromwärmeverluste, als sie mit dem Gleichstromwiderstand der Wicklung vorausberechnet werden können. Bei großen Maschinen können diese Verluste das Gros der Maschinenverluste ausmachen und zu einer ungünstigen Auslegung des Magnetkreises der rotierenden elektrischen Maschine führen. Ähnlich wie bei der Stromverdrängung 2. Ordnung sollte der Stromverdrängungsfaktor den Wert 1,3 nicht übersteigen, da ab hier eine Vergrößerung der Nuthöhe nicht mehr zu einer Reduzierung der Wicklungsverluste führt, sondern nur unnütz die Eisenverluste und den Kupfereinsatz vergrößert. Neben den Aspekten Materialeinsatz und Effizienzanforderung führt die ungleiche Verteilung der Stromdichte über die Teilleiter zu einer sehr inhomogenen Erwärmung dieser Teilleiter. Das wirkt sich letztlich sehr negativ auf die Wicklungslebensdauer aus. Im Sinn der Materialökonomie und der immer mehr an Bedeutung zunehmender Effizienzanforderung ist die Berücksichtigung bzw. die Verringerung der durch die Ständerstromverdrängung hervorgerufenen Verluste ein bislang stark unterschätztes Potential.

Die steigende Leistung führt, bedingt durch den nahezu konstanten zulässigen Ankerstrombelag und die begrenzte magnetische Flussdichte des Eisens zur Notwendigkeit der Vergrößerung der Luftspaltfläche. Hierdurch wird der Fluss (Luftspaltfluss) der Maschine größer, wobei die Spannungsebene (690V oder 400V) in der Regel fest liegt. Zudem führt man große Maschinen mit deutlich höheren Nutzahlen (Lochzahlen) aus als kleine Maschinen. Je größer also eine Maschine wird, umso weniger Windungen ergeben sich je Nut. Die Träufel- oder Einziehwicklung lebt von der leichten Formbarkeit der Einzeldrähte, was das Vergrößern des Querschnitts der Runddrähte begrenzt. Der Elektromaschinenbauer behilft sich daher mit der Parallelschaltung vieler Einzeldrähte (20...40 Stück), um die gewünschte Nutfüllung bei noch händelbarem Leiterquerschnitt zu erreichen. Diese parallelen Drähte werden an den Enden der Spulengruppen parallel geschaltet (in der Regel durch das Einlöten in einen Kabelschuh). Hierdurch treten je nach räumlicher Verteilung der einzelnen parallelen Drähte in der Nut Schleifenströme innerhalb der parallelen Teilleiter einer Spulengruppe auf.

Der Unterschied zwischen einer "manuell" eingeträufelten Wicklung und der eingezogenen Wicklung besteht darin, dass eine Wicklung bei dem Einziehverfahren mit einem Arbeitsschritt je Spulengruppe maschinell in die Nut "gezogen" wird. Beiden Verfahren ist zu Eigen, dass die Teilleiter ihren Platz in der Nut bzw. Schicht nicht determiniert einnehmen, sondern zufällig ihre geometrische Lage erreichen. Die maschinell hergestellte Wicklung zeigt dabei erwartungsgemäß kleinere Streuungen in der Stromverdrängung als die manuell hergestellte. Bei größeren rotierenden elektrischen Maschinen mit Wechselstromwicklungen ist es zur Vermeidung von Effekten der Stromverdrängung allgemein bekannt Formspulen aus parallelen Leiterbündeln einzusetzen, welche durch gesonderte Isolierschichten getrennt sind. Bei Formspulen ergibt sich nach deren Montage immer eine genau definierte Lage der Teilleiter in der Nut. Beim Einsatz von Formspulen steigt jedoch, sowohl der Aufwand bei der Herstellung der Formspulen selbst, als auch bei deren Montage erheblich gegenüber einer Träufel- oder Einziehwicklung aus Runddrähten.

Aus der DE 1 488 676 A1 ist eine Vorrichtung zum Bewickeln der Ständer von zwei oder mehrpoligen Ein- oder Mehrphasenmaschinen bekannt, mit der eine aufwändige Montage von Teilleitern einer Wechselstromdrahtwicklungen als Träufelwicklung in Nuten mit besonders schmalen Nutschlitzen eines Ständers elektrischer Maschinen erfolgen kann. Die Drahtwicklung wird unter Benutzung von besonders gestalteten Wickelschablonen axial mittels weiterer Hilfsmittel eingezogen, ohne dass die Spulen wie bis dahin allgemein üblich, einzeln jede für sich, eingezogen werden müssen.

In der DE 427 006 C ist ein Verfahren zum Einbringen von aus einem fortlaufenden Leiter gewickelten, bis auf den Wicklungskopf fertig isolierten Spulen in halbgeschlossenen Nuten elektrischer Maschinen beschrieben, bei dem die Teileiter einer Drahtwicklung zu einzelnen Teileiterpaketen zusammen gefasst und als Paket eingezogen werden. Dabei ist ein Wicklungskopf bereits in seiner endgültigen Form fertig ausgebildet, während aus Gründen eines vorteilhaften Einziehverfahrens der andere Wicklungskopf zunächst fächerartig aufgeteilt ausgebildet ist und erst später der Wicklungskopf fertig geformt wird.

Die GB 1 219 875 A beschreibt eine technische Lösung, bei der eine Vorrichtung und ein Verfahren zur Prüfung von elektrischen Spulen mittels einer induktiven Vorrichtung vorgestellt wird, mit der einzelne Spulen in eingebauten Zustand ausgemessen und Fehler der jeweils ausgemessenen Spule unter Lastbedingungen detektiert werden können. Dies erfolgt mittels einer extern angeschlossenen Testschaltung über gesondert zugeführte Impulströme um die Qualität der eingelegten Wicklung prüfen zu können.

Der Erfindung liegt die Aufgabe zugrunde, eine Wechselstromwicklung für eine rotierende elektrische Maschine und ein Verfahren zu ihrer Herstellung aus Runddrähten, d. h. bei einer Träufel- bzw. Einziehwicklung zu schaffen, welche eine höhere Leistungsausbeute durch weitgehende Vermeidung der Stromverdrängungsverluste oder auch den Einsatz von Runddrahtwicklungen für größere Maschinen als bislang üblich ermöglicht, sowie durch die Vermeidung von Heißpunkten eine erhöhte Verfügbarkeit und eine Verlängerung der Lebensdauer der Maschine gewährleistet.

Die Aufgabe der Erfindung wird durch die Merkmale des 1. Patentanspruchs gelöst. Weitere zweckmäßige Ausgestaltungen der Erfindung sind Gegenstand des zweiten oder der rückbezüglichen Unteransprüche. Das erfindungsgemäße Verfahren zur Herstellung einer Wechselstromwicklung betrifft die verschiedenen Arten von Wechselstromwicklungen bei rotierenden elektrischen Maschinen aus Runddrähten mit einer Träufel- oder Einziehwicklung. Nach dem Einlegen oder Einziehen der Wicklung in das Blechpaket werden zunächst die Eigeninduktivitäten aller Teilleiter jeder einzelnen Spule messtechnisch bestimmt. Aus den ermittelten Messwerten aller Eigeninduktivitäten jeder Spule wird ein Mittelwert $L_{quer}$ berechnet. Anschließend werden diejenigen Teilleiter deren Eigeninduktivitäten sich erheblich vom Mittelwert $L_{quer}$ unterscheiden im Wickelkopf oder einem nach dem Einlegen oder Einziehen zugänglichen Bereich aufgetrennt. Jetzt werden die Eigeninduktivitäten der aufgetrennten Teilleiter jeder Spule erneut messtechnisch bestimmt und anschließend werden die Eigeninduktivitäten der Teilleiter nach ihrer Größe sortiert. Anschließend wird festgelegt welche Teilleiter wieder zusammengeschaltet werden. Das Zusammenschalten der ausgemessenen Teilleiter erfolgt so, dass die Summe der Werte der Eigeninduktivitäten zweier zusammenzuschaltender Teilleiter so gering wie möglich um den Mittelwert $L_{quer}$ streut. Teilleiter, deren gemessene Werte der Eigeninduktivität in etwa dem Mittelwert $L_{quer}$ entsprechen, werden nicht aufgetrennt. Die aufgetrennten Teilleiter, d. h. die, welche gemäß der Ergebnisse der Sortierung jeweils zusammenzuschalten sind, werden elektrisch zu einem Teilleiterpaar mit geeigneten an sich bekannten Methoden verschaltet. Diese neuen Teilleiterpaare werden gegeneinander und gegen die anderen Wicklungsteile in der sogenannten Kompensationsstelle elektrisch isoliert.

Fachlicher Hintergrund dieser neuartigen Verfahrensweise ist die Erkenntnis, dass die Eigeninduktivität eines jeden Teilleiters einer Wicklung indirekt Auskunft gibt über die mittlere Lage des betreffenden Teilleiters in der Nut und über ein etwaiges Abdriften des Teilleiters innerhalb der Nut beim Herstellen der Wicklung, d. h. beim Einlegen oder Einziehen. Es wurde erkannt, dass praktisch nur durch die Gegeninduktivität der einzelnen Teilleiter die Stromverdrängung und damit die Stromwärmeverluste maßgeblich beeinflusst werden. Daraus wurde der Schluss gezogen, indem man die erfindungsgemäßen Merkmale anwendet, kann die Stromverdrängung in solcherart Wicklungen weitgehend vermieden werden. Dies führt insgesamt zu einer erheblich homogeneren Temperaturverteilung in der Wicklung und erhöht den Wirkungsgrad und die Ausnutzungsziffer der gesamten Maschine mit einer Wechselstromwicklung aus Runddrähten.

Eine weitere Annahme ist, dass die Stromverdrängung zweiter Ordnung in der Praxis bei Berücksichtigung folgender Bedingungen nahezu keine Rolle spielt und vernachlässigt werden kann. Eigentlich erfahren die Teilleiter selbst ebenfalls eine Widerstandserhöhung infolge des Nutquerfeldes. Diese Widerstandserhöhung der Teilleiter bezeichnet man als Stromverdrängung 2. Ordnung. Die Stromverdrängung 2. Ordnung bezeichnet die Wirbelstromverluste im massiven Teil der Teilleiter innerhalb der Nut. Für diesen Teil der Stromverdrängung ist praktisch nur die Durchflutung der Nut in der Lage des entsprechenden Teilleiters verantwortlich. Nach der Theorie (*siehe hierzu* Richter, R. Elektrische Maschinen Band I, Basel/Stuttgart, Verlag Birkhäuser, 1967) kann man für eine Runddrahtwicklung die Stromverdrängung in dem Teilleiter an der Nutöffnung entsprechend zuverlässig berechnen. Entscheidend ist hier der ermittelte Stromverdrängungsfaktor.

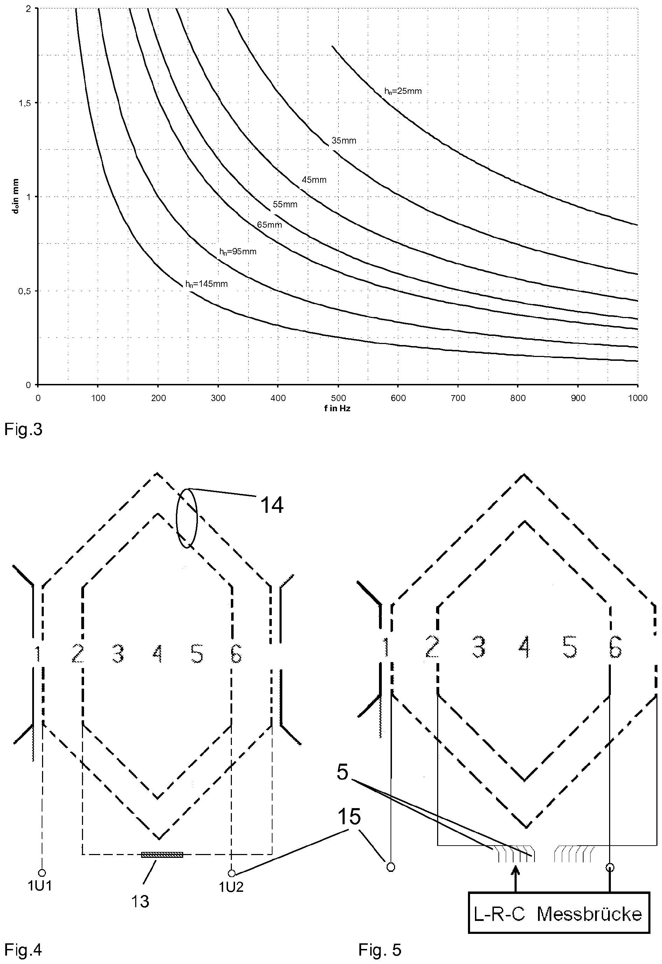

Legt man für diesen Stromverdrängungsfaktor allerdings eine Grenze von 1,33 fest, so kann in Abhängigkeit der Nuthöhe und der Frequenz ein maximaler Teilleiterdurchmesser nach Figur 3 angegeben werden. Wird dieser Grenzwert nicht überschritten, so ist die Stromverdrängung 1. Ordnung die allein dominierende. Deren weitgehende Vermeidung und die sich daraus ergebenden Vorteile sind mit der Erfindung auf einfache Art und Weise realisierbar. Dabei wird erfindungsgemäß an einer oder mehreren natürlichen oder zusätzlich eingefügten Schaltverbindungen eine Verbindung jeweils eines parallelen Drahtes eines Spulenteils mit einem parallelen Draht des anderen Spulenteils in der Form erfolgen, dass die Gesamtinduktivitäten der parallelen Drähte der Spulengruppe nur minimal um einen Mittelwert streuen bzw. gleich sind. Eigentlich müsste zur genauen Ermittlung des Mittelwertes eine Messung der Gegeninduktivitäten aller Teilleiter erfolgen. Diese Messung der Gegeninduktivität ist messtechnisch allerdings zeitraubend und erheblich aufwändiger. Statt dessen wird erfindungsgemäß nur die Eigeninduktivität jedes einzelnen Teilleiters gegen die jeweilige Spulenklemme über eine Messbrücke gemessen. Dies ist ausreichend um anschließend diejenigen Drahtpaare durch ein Sortierverfahren zu ermitteln, die zu einer möglichst geringen Stromverdrängung führen.

Durch dieses einfache Messverfahren lassen sich zwar nur die Eigeninduktivitäten der Teilleiter ermitteln. Diese geben jedoch ausreichend Auskunft über die mittlere Lage des Leiters in der Nut bzw. den Nuten und über ein etwaiges Abdriften in mögliche Extremlagen der Nut. Theoretisch und praktisch hat sich gezeigt, dass die Auswertung der Eigeninduktivität für die Bestimmung der optimalen Drahtpaarung völlig ausreicht.

Die Nutzung einer vorhandenen Schaltverbindung ist besonders bei Zwei- und Mehretagenwicklungen für dieses Verfahren geeignet, da sie bereits Schaltverbindungen zum Zusammenschalten der Etagen enthalten. Nach dem Stand der Technik werden diese Schaltverbindungen mit sogenannten Schlössern realisiert, in denen wiederum alle parallelen Teilleiter gleichzeitig elektrisch verbunden werden. Erfindungsgemäß werden diese Schlösser durch einzelne gegeneinander schwach isolierte elektrische Verbindungen, die Kompensationsstelle substituiert. Dadurch können die zusätzlichen Verluste, die durch die Stromverdrängung der Ständerwicklung verursacht werden, auf unter 25% gegenüber klassisch ausgeführten Wechselstromwicklungen reduziert werden. Je mehr "ausgemessene" Schaltverbindungen je Spulengruppe ausgeführt werden, umso besser sind die Möglichkeiten die Differenzen in den Eigeninduktivitäten der Teilleiterpaarungen auszugleichen.

Auch bei der Reihenschaltung von Wicklungsgruppen, die bei großen Niederspannungsmaschinen selten ausgeführt werden, kann eine derartige erfindungsgemäße Kompensation der Stromverdrängung 1. Ordnung genutzt werden. Hierfür behandelt man die Verbindungsstellen der Spulengruppen wie die Schaltverbindung innerhalb einer Spulengruppe. Besonders vorteilhaft ist es, wenn beim Verfahren zur Herstellung einer Wechselstromwicklung für eine rotierende elektrische Maschine aus Runddrähten mit einer Träufel- oder Einziehwicklung nach dem Einlegen oder Einziehen der Wicklung in das Blechpaket alle Teilleiter zweier in Reihe zu schaltender Spulen an einer Stelle im Wickelkopf oder einem nach dem Einlegen oder Einziehen zugänglichen Bereich aufgetrennt werden oder bereits aufgetrennt sind. Nach der Erfindung ist es möglich, dass auch die natürlichen Schaltverbindungen zweier in Reihe zu schaltender Spulen so genutzt werden. Dann erfolgt die messtechnische Bestimmung der Eigeninduktivitäten aller einzelnen Teilleiter jeder Spule. Anschließend werden die messtechnisch bestimmten Werte der Eigeninduktivitäten aller Teilleiter nach ihrer Größe sortiert. Anschließend wird eine Bestimmung des Mittelwerts $L_{quer}$ aus allen gemessenen Eigeninduktivitäten nach folgender Art und Weise durchgeführt:

$$L_{quer} = \frac{1}{ad}\left[\sum_{(ad)} LA_k + \sum_{(ad)} LE_k\right]$$

Danach erfolgt das Zusammenschalten der Teilleiter in Reihe der beiden zusammenzuschaltenden Spulenteile in der Art und Weise, dass die Summe der Werte der Eigeninduktivitäten der zwei zusammen geschalteten Teilleiter so gering wie möglich um den vorher berechneten Mittelwert $L_{quer}$ streut. Nachdem diese zusammenzuschaltenden Teilleiter untereinander elektrisch zu einem Teilleiterpaar verschaltet worden sind, werden diese Teilleiterpaare gegeneinander und gegen die anderen Wicklungsteile in einer Kompensationsstelle elektrisch isoliert. Diese Verfahrensausführung mit Trennung aller Teilleiter ist weniger aufwändig, da nur eine Messung der Eigeninduktivität erfolgt. Zudem erzielt diese die besten Ergebnisse bei der Vermeidung der Stromverdrängung 1. Ordnung.

Von wesentlichem Vorteil beim Verfahren zur Herstellung einer Wechselstromwicklung aus Runddrähten mit in Reihe geschalteten Spulengruppen ist es, wenn auch die natürlichen Schaltstellen der Spulen, die in Reihe zu schalten sind, als Kompensationsstellen ausgeführt sind.

Beim Verfahren zur Herstellung einer Wechselstromwicklung aus Runddrähten ist es vorteilhaft, wenn die Spulengruppen oder auch einzelne Spulen in etwa der Mitte der Gesamtlänge aufgetrennt werden und an dieser Stelle je eine Kompensationsstelle zur Vermeidung der Auswirkung der Stromverdrängung 1. Ordnung ausgeführt ist.

Vorteilhafterweise sollte in jeder Spulengruppe einer Wicklung einer Wechsel- oder Drehstrommaschine eine solche neuartige "ausgemessene" Kompensationsstelle (zusätzliche Schaltverbindung) ausgebildet sein. Von Vorteil ist es, wenn hier ein automatisiertes Verfahren zur Bestimmung der Eigeninduktivitäten und zur Verschaltung der Teilleiterpaare angewendet wird. Dabei werden die einzelnen Teilleiter hierzu nach Teilleiterabschnitt Spulenanfang $A_1...A_{ad}$ und Teileiterabschnitt Spulenende $E_1...E_{ad}$ getrennt, in entsprechende Klemmverbindungen eingelegt und beispielsweise mit einem analogen Multiplexer elektrisch zur Eigeninduktivitätsmessung verbunden. In der Regel ergeben sich dann zwei etwa gleich lange Teilleiterabschnitte. Diese Klemmen sind mit $A_1...A_{ad}$ bzw. $E_1...E_{ad}$ gekennzeichnet. Nacheinander werden so mittels des Multiplexers über eine Messbrücke die Induktivitäten in einem Vektor $LA_{k=(1...ad)}$ in einem Steuerrechner abgelegt. Nach der Bestimmung des letzen Wertes von $LA_k$ wird ein Umschalter S1 vom Steuerrechner umgeschaltet. Jetzt können die Werte $LE_k$ gemessen und in einem Vektor $LE_{k=(1...ad)}$ abgelegt werden. Danach erfolgt die Auswertung der gemessenen Induktivitäten durch ein an sich bekanntes Sortierverfahren, das im Steuerrechner hinterlegt ist, wie z.B. "Bubblesort". In einem Vektor werden die Vektorelemente, also die Induktivitäten mit aufsteigenden Werten und in dem anderen mit abfallenden Werten sortiert. Auf diese Weise entstehen zwei Indexvektoren $a_i$ und $e_i$, die bereits die Information für die Zusammenschaltung enthalten. Das eigentliche Zusammenschalten geschieht dann entsprechend der ermittelten Wertepaare. Nach der Anweisung des Steuerrechners werden iterativ die Drahtpaare aus den Klemmen $A_1...A_{ad}$ bzw. $E_1...E_{ad}$ entnommen und miteinander wie ermittelt verschaltet. Dies kann auch teil- oder vollautomatisch, z.B. durch einen Roboter, erfolgen. Auch eine vorgefertigte Verbindungsmatrix, aus der bestimmte Verbindungen durch Fräsen, Ausschmelzen oder Lasern entfernt werden, ist generell denkbar und fertigungstechnisch ausführbar. Ein wesentlicher Vorteil eines solcherart automatisierten Erfassungsverfahrens ist, dass mit einem universellen Messverfahren in einem einzigen Gerät, welches automatisch alle einzelnen Teilleiter ausmisst, gleichzeitig sortiert und festlegt werden kann, wie die einzelnen Teilleiter paarweise in der neuartigen Kompensationsstelle zu verschalten sind. Dies führt insbesondere in der Serienfertigung zu einer erheblichen Zeitersparnis und schließt zuverlässig Fehler beim Sortieren aus. Im Prinzip sind aber auch beim erfindungsgemäßen Verfahren zur Herstellung einer Wechselstromwicklung für eine rotierende elektrische Maschine aus Runddrähten mit einer Träufel- oder Einziehwicklung alle einzelnen Schritte von Hand ausführbar. In der konsequenten Anwendung und in der Gesamtheit aller Schaltverbindungen zu einer Spulengruppe mittels der als Kompensationsstelle bezeichneten Schaltverbindung erreicht man als Vorteil eine weitgehend vollständige Kompensation der Stromverdrängung. Ebenfalls vermeidet man Heißpunkte innerhalb der Wechselstromwicklung, was zu einer erhöhten Verfügbarkeit und eine Verlängerung der Lebensdauer der Maschine führt.

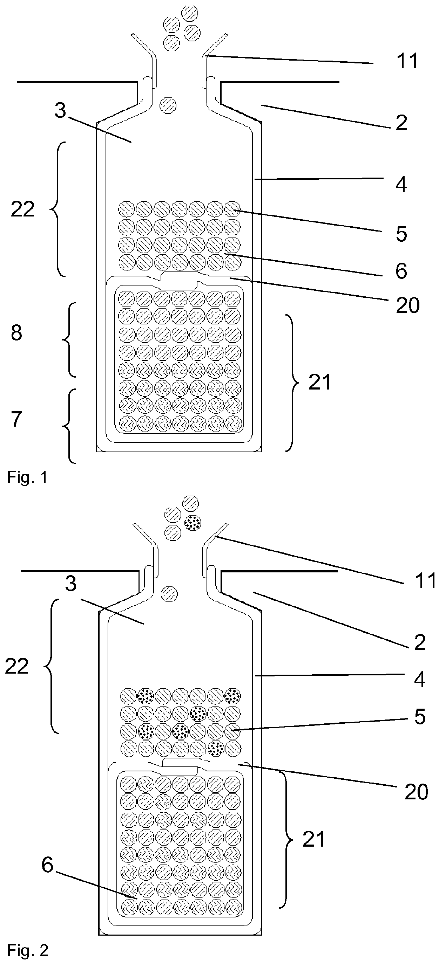

Die erfindungsgemäße Wechselstromwicklung für eine rotierende elektrische Maschine und das neuartige Verfahren zu Ihrer Herstellung aus Runddrähten für eine Träufel- oder Einziehwicklung soll nachstehend in einem Ausführungsbeispiel an Hand der Figuren 1 bis 10 näher erläutert werden.

| | |
|---|---|
| Fig. 1 zeigt | eine Nut mit vier Windungen (idealisiert) während Träufelvorgang |
| Fig. 2 zeigt | eine Nut mit vier Windungen (realistisch) während Träufelvorgang |
| Fig. 3 zeigt | den maximal zulässiger Leiterdurchmesser als Funktion der Frequenz mit dem Parameter Nuthöhe |
| Fig. 4 zeigt | eine Zweilochspule mit einer künstlichen Schaltverbindung |
| Fig. 5 zeigt | Ausmessen der Teilleiterpaare |
| Fig. 6 zeigt | realisierte Kompensationsstelle |
| Fig. 7a zeigt | Zweietagenwicklung mit einer natürlichen Schaltverbindung |
| Fig. 7b zeigt | Zweietagenwicklung mit ausgeführten Kompensationsstellen |
| Fig. 8 zeigt | Reihenschaltung von Spulengruppen als natürliche Schaltverbindung |
| Fig. 9 zeigt | Prinzipschaltbild zum automatisierten Verfahren zum Ausmessen der Teilleiterpaare |
| Fig.10 zeigt | Programmablaufplan zur Bestimmung |

der Leitpaarung

Figur 1 zeigt eine beispielhafte Ständernut 3 einer Wechselstromwicklung mit einer Träufel- oder Einziehwicklung aus Runddraht 5 in einem Ständerblechpaket 2 mit einer Zweischichtwicklung. Die Ständernut 3 ist mit der Hauptisolation 4 vollständig ausgekleidet. Diese Figur veranschaulicht schematisch den Einträufelvorgang der Runddrähte 5 mit Hilfe einer wieder entfernbaren Träufelhilfe 11. Die Runddrähte 5 einer Spule der Unterschicht 21 werden gegen die Runddrähte 5 der Spule der Oberschicht 22 mit einer Spulen- oder Zwischenisolation 20 isoliert. Die Spule der Unterschicht 21 besteht aus zwei Windungen 7 und 8 wobei als Windungsisolation 6 ein geeigneter Drahtlack vorgesehen ist. Theoretisch kommen die einzelnen Drähte jeder Windung 7 und 8 ideal parallel zueinander in der Nut zu liegen. Bei dieser idealisierten Zweischichtwicklung sind $w_n=4$ Windungen je Ständernut 3 eingelegt. Jede der vier Windungen besteht hier aus n=4 Lagen von Drähten übereinander und sieben Drähten nebeneinander, d. h. jede Windung besteht aus ad=28 parallelen Drähten.

Als Spule ist der Wicklungsteil zu verstehen, der ohne Unterbrechung und gleichzeitig mit allen parallelen Drähten, d. h. Teilleitern auf der Spulenwickelmaschine für das Einziehen oder Einträufeln maschinell gewickelt und vorgefertigt wird. Die Spulengruppe ist das kleinste symmetrische Vielfache der Strangwicklung und wird in der Literatur auch als Urwicklung bezeichnet.

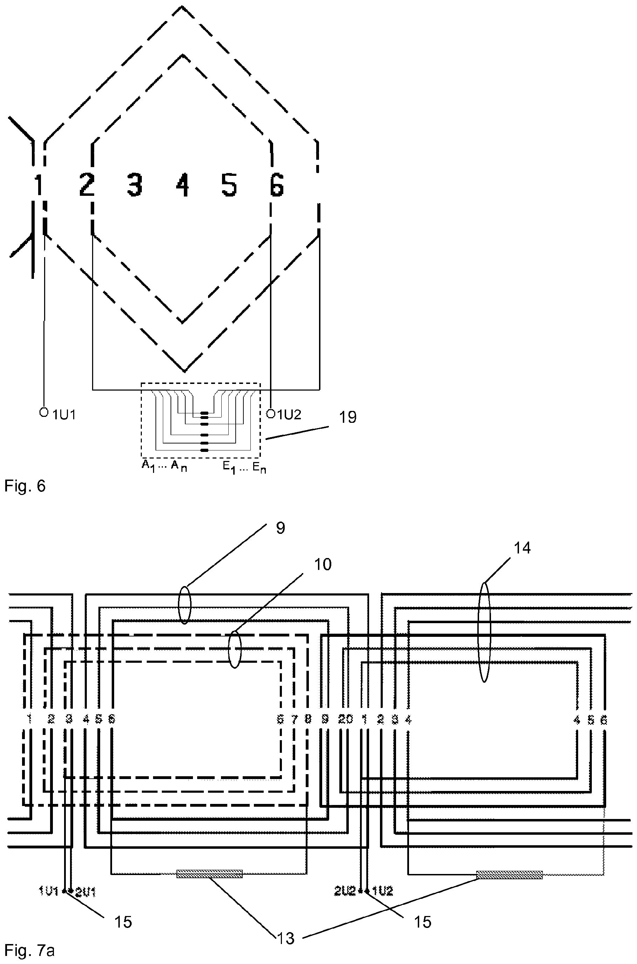

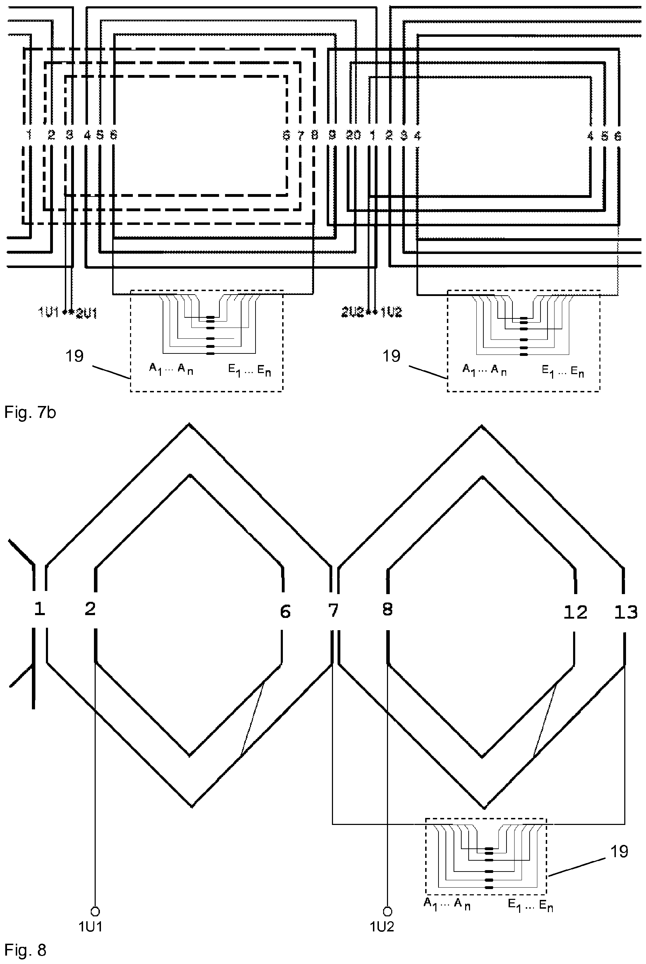

Unter einer Zweietagewicklung versteht man die Anordnung der Spulen im Wickelkopf in zwei Ebenen, was in der Regel zu kürzeren und höheren Wickelköpfen führt. Der Übergang von der unteren in die obere Etage wird in der Regel durch eine bekannte Schaltverbindung realisiert. So ist zum Beispiel in Figur 7 eine Zweischichtwicklung gezeigt, bei der zudem die Ausführung verkürzter Spulen für die Reihenschaltung genutzt wird. Die erfindungsgemäße Schaltstelle zweier ausgemessener, sortiert verbundener und isolierter Teilleiter werden im Gegensatz zu den üblichen Schaltverbindungen in der Erfindung zur besseren Unterscheidung hier als Kompensationsstelle 19 bezeichnet.

In Figur 2 ist eine in der Praxis tatsächlich beim Träufeln oder Einziehen realistisch sich ausbildende Wechselstromwicklung gezeigt. In der Ständernut 3 ist eine Zweietagenwicklung aus Runddrähten 5 mit vier wn=4 Windungen während des Einträufelns abgebildet. Die Verteilung (Schraffur beachten) der einzelnen Teilleiter stellt sich willkürlich ein, d. h. die Lage der Teilleiter unterliegt dem Zufallsprinzip. Hier sind in der Unterschicht 21 zwei Windungen und in der Oberschicht 22 ist eine Windung mit ad=28 nicht ideal parallel verteilten Drähten dargestellt. Die vierte Windung in der Oberschicht 22 wird gerade eingelegt. Die Unterschicht 21 ist gegen die Oberschicht mit der Zwischenisolation 20 isoliert und dadurch abgegrenzt.

Aus der Darstellung gemäß Figur 3 kann der maximal zulässige Teilleiterdurchmesser $d_0$ als Funktion

der Frequenz mit dem Parameter Nuthöhe $h_n$ entnommen werden. Vorraussetzung hierfür bildet die Festsetzung eines maximal zulässigen Stromverdrängungsfaktors von 1,33. Durch diese Annahme kann in Abhängigkeit von der Nuthöhe $h_n$ des Ständerblechpaketes 2 und der Frequenz ein maximaler Teilleiterdurchmesser $d_0$ ermittelt werden. Wird nämlich dieser Grenzwert nicht überschritten, so wurde gefunden, dass die Stromverdrängung 1. Ordnung die allein dominierende in der gesamten Wechselstromwicklung ist. Wird dieser Grenzwert allerdings überschritten, nehmen die Rückwirkungen der Stromverdrängung 2. Ordnung solch einen Wert an, dass diese Auswirkungen auf die Stromverdrängung 1. Ordnung der rotierenden elektrischen Maschine haben und nicht ohne weiteres vernachlässigt werden können. Wird der Teilleiterdurchmesser $d_0$ so gewählt, dass der maximale Wert der Stromverdrängung 2. Ordnung nicht überschritten wird, so wurde überraschend erkannt, dass in diesem Fall praktisch nur durch die Gegeninduktivität der einzelnen Teilleiter die Stromverdrängung und damit die Stromwärmeverluste maßgeblich beeinflusst werden. Indem man diese Stromverdrängung der 1. Ordnung weitgehend vermeidet, führt dies zu einer homogenen Temperaturverteilung sowohl in der Wicklung im Nutbereich als auch im Wickelkopf und erhöht den Wirkungsgrad und die Ausnutzungsziffer der gesamten Maschine.

In Figur 4 ist das Wickelschema einer Zweilochspule mit einer künstlichen Schaltverbindung 13 innerhalb einer Spulengruppe 14 gezeigt. Die Drähte der Spulen sind am Spulenende mit einem (nicht dargestellten) Kabelschuh 15 versehen, welcher die Teilleiter untereinander elektrisch verbindet.

Aus der Figur 5 an Hand eines Wickelschemas ist ersichtlich, wie das Ausmessen der einzelnen Teilleiterpaare erfolgt. Es zeigt, dass alle Teilleiter einer Spule zunächst aufgetrennt und dann an eine L-R-C Messbrücke 12 angeschlossen und einzeln die Eigeninduktivitäten der Teilleiter ausgemessen werden. Die Eigeninduktivität eines jeden Teilleiters einer Windung gibt indirekt Auskunft über die mittlere Lage des Teilleiters in der Nut und über ein etwaiges Abdriften des Teilleiters innerhalb der Nuten.

Das Wickelschema gemäß Figur 6 zeigt die neuartigen zusätzlich realisierten Kompensationsstellen 19 in ihrer Gesamtheit. Diese Teilleiterzusammenschaltungen verbinden die einzelnen Teilleiter der Spulen untereinander in der Art und Weise, dass die Summe der beiden Eigeninduktivitäten der Teilleiter möglichst wenig vom vorher errechneten Mittelwert $L_{quer}$ abweicht. Durch diese erfindungsgemäße Maßnahme wird praktisch im Nachhinein wieder die nahezu ideale Parallelität (ideale Lage) der einzelnen Teilleiter wie bei einer idealen Wicklung hergestellt.

In der Figur 7a ist ein gesamtes Wickelschema einer Zweietagenwicklung mit natürlichen Schaltverbindungen 13 einschließlich oberen Etagenwicklung 9 und der unteren Etagenwicklung 10 sowie beispielhaft eine Spulengruppe 14 gezeichnet. Dagegen ist in Figur 7b das Wickelschema einer Zweietagenwicklung mit erfindungsgemäßen Kompensationsstellen 19 veranschaulicht.

Aus der Figur 8 ist die Anordnung erfindungsgemäßer Kompensationsstellen 19 bei der Reihenschaltung von Spulengruppen auch als natürliche Schaltverbindung abgebildet, d. h. es erfolgt eine Verbindung von zwei Urwicklungen.

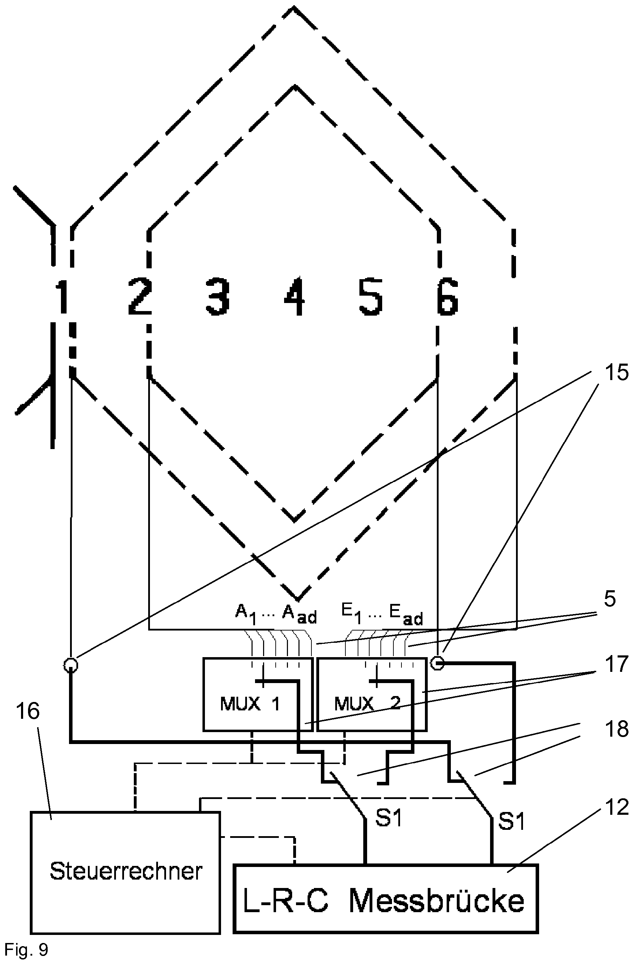

Figur 9 zeigt ein Prinzipschaltbild zu einem bevorzugt automatisierten Verfahren zum Ausmessen der Eigeninduktivitäten der Teilleiterpaare. Da in jeder Spulengruppe der Wicklung einer Wechsel- oder Drehstrommaschine eine solche neuartige "ausgemessene" Verbindung herzustellen ist, wird hier ein automatisiertes Verfahren zur Bestimmung der Teilleiterpaare vorgeschlagen und aufgezeigt. Damit lässt sich der Aufwand bei der Wicklungsherstellung auf ein vernünftiges Maß senken und die Vorteile der neuartigen Wechselstromwicklung werden nicht durch erhöhten Fertigungsaufwand wieder zu nichte gemacht. Die einzelnen Teilleiter der Runddrähte 5 werden hierbei nach Teileiterabschnitten Spulenanfang $A_1...A_{ad}$ und Teileiterabschnitten Spulenende $E_1...E_{ad}$ getrennt in entsprechende Klemmverbindungen eingelegt und mit dem analogen Multiplexer 17 elektrisch verbunden. Diese Klemmen des Anfangsteilleiterabschnitts sind mit $A_1...A_{ad}$ bzw. die Klemmen der Endenteilleiterabschnitts sind mit $E_1...E_{ad}$ gekennzeichnet. Nacheinander werden so mittels des Multiplexers 17 über die Messbrücke 12 gegen die Wicklungsenden (Anschluss mit den Kabelschuhen 15) die Werte der Induktivitäten in den Vektoren $LA_{k=(1...ad)}$ und $LE_{k=(1...ad)}$ im Steuerrechner 16 abgelegt. Nach der Bestimmung des letzen Wertes von $LA_k$ wird der Umschalter S1 18 vom Steuerrechner 16 umgeschaltet. Jetzt können die Werte $LE_k$ gemessen und im Steuerrechner 16 abgelegt werden.

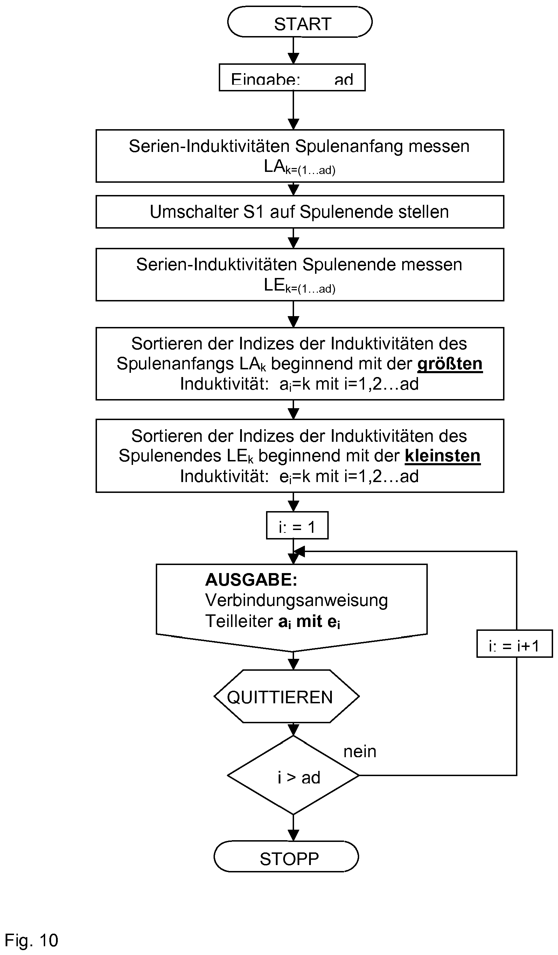

In der Figur 10 ist ein bevorzugter Programmablaufplan zur schnellen und fehlerfreien Bestimmung der Leiterpaarung der einzelnen zusammenzuschaltenden Teilleiterpaare gezeigt. Dabei erfolgt die Auswertung der Werte der gemessenen Induktivitäten durch ein geeignetes an sich bekanntes Sortierverfahren, das im Steuerrechner 16 hinterlegt ist. Solch ein geeignetes Sortierverfahren ist z.B. "Bubblesort". Hier werden die Werte der Vektoren mit aufsteigenden Induktivitäten und die Werte der anderen mit abfallenden Induktivitäten sortiert. Auf diese Weise entstehen zwei Indexvektoren $a_i$ und $e_i$, die bereits die eigentliche Information für die Zusammenschaltung der neuen Teileiterpaare enthalten. Das eigentliche Zusammenschalten geschieht in der Schleife gemäß Figur10. Nach der Anweisung des Steuerrechners 16 werden iterativ die Drahtpaare, bestehend aus einem Draht des Spulenanfangs aus den Klemmen $A_1...A_{ad}$ und einem Draht des Spulenendes $E_1...E_{ad}$ entnommen und miteinander gemäß Festlegung verschaltet. Dies kann teil- oder auch vollautomatisch, z.B. durch einen Roboter, oder auch per Hand erfolgen. Auch eine vorgefertigte Verbindungsmatrix, aus der bestimmte Verbindungen durch Fräsen, Ausschmelzen oder Lasern entfernt werden, ist denkbar.

Die Erfindung ist anwendbar für alle Arten von Wechselstromwicklungen sowohl bei der Herstellung der Ständerwicklung als auch bei der Herstellung der Läuferwicklung rotierender elektrischer Maschinen.

**Bezugszeichenliste**

1 Ständerwicklung
2 Ständerblechpaket
3 Ständernut
4 Hauptisolation
5 Runddrähte
6 Windungsisolation
7 Windung 1
8 Windung 2
9 obere (innere) Etagenwicklung
10 untere (äußere) Etagenwicklung
11 Träufelhilfe
12 Messbrücke
13 Schaltverbindung
14 Spulengruppe
15 Kabelschuh
16 Steuerrechner
17 Analogmultiplexer
18 Umschalter S
19 Kompensationsstelle
20 Zwischenisolation
21 Unterschicht
22 Oberschicht

Formelzeichen:

| | |
|---|---|
| $L_{quer}$ | Mittelwert der Eigeninduktivität der in Reihe geschalteten Teilleiterabschnitte |
| ad | Anzahl der parallelen Drähte |
| n | Anzahl der Drähte übereinander |
| $w_n$ | Windungszahl je Nut |
| $h_n$ | Höhe der Nut |
| $d_0$ | Leiterdurchmesser blank |
| $A_1...A_{ad}$ | Teilleiterstrecke Spulenanfang und zugehörige Klemmverbindung |
| $E_1...E_{ad}$ | Teilleiterstrecke Spulenende und zugehörige Klemmverbindung |
| $LA_k$ | Wert der Induktivität eines Teilleiteranfangs |
| $LE_k$ | Wert der Induktivität eines Teilleiterendes |

**Patentansprüche**

**1.** Verfahren zur Herstellung einer Wechselstromwicklung für eine rotierende elektrische Maschine aus Runddrähten mit einer Träufel- oder Einziehwicklung,

**dadurch gekennzeichnet,**

**dass** nach dem Einlegen oder Einziehen der Wicklung in das Blechpaket die Eigeninduktivitäten aller Teilleiter jeder einzelnen Spule messtechnisch bestimmt werden, dass daraus ein Mittelwert $L_{quer}$ aller Eigeninduktivitäten jeder Spule ermittelt wird,

**dass** diejenigen Teilleiter deren Eigeninduktivitäten sich erheblich vom Mittelwert $L_{quer}$ unterscheiden im Wickelkopf oder einem nach dem Einlegen oder Einziehen zugänglichen Bereich aufgetrennt werden, die Eigeninduktivitäten der aufgetrennten Teilleiter jeder Spule messtechnisch bestimmt werden, die Eigeninduktivitäten der Teilleiter nach ihrer Größe sortiert werden,

so dass die Summe der Werte der Eigeninduktivitäten zweier zusammenzuschaltender Teilleiter so gering wie möglich um den Mittelwert $L_{quer}$ streut, wobei die Werte der Eigeninduktivitäten der nichtaufgetrennten Teilleiter in etwa dem Mittelwert $L_{quer}$ entsprechen müssen,

und **dass** in einer Kompensationsstelle (19) diese zusammen zuschaltenden Teilleiter untereinander elektrisch zu einem Teilleiterpaar verschalten werden und

diese Teilleiterpaare gegeneinander und gegen die anderen Wicklungsteile elektrisch isoliert werden.

**2.** Verfahren zur Herstellung einer Wechselstromwicklung für eine rotierende elektrische Maschine aus Runddrähten mit einer Träufel- oder Einziehwicklung,

**dadurch gekennzeichnet,**

**dass** nach dem Einlegen oder Einziehen der Wicklung in das Blechpaket alle Teilleiter zweier in Reihe zu schaltender Spulen an einer Stelle im Wickelkopf oder einem nach dem Einlegen oder Einziehen zugänglichen Bereich aufgetrennt werden oder sind, oder dass die natürlichen Schaltverbindungen zweier in Reihe zu schaltender Spulen so genutzt werden,

**dass** die Eigeninduktivitäten aller einzelnen Teilleiter jeder Spule messtechnisch bestimmt werden,

**wobei** die Werte der Eigeninduktivitäten der Teilleiter nach ihrer Größe sortiert werden,

**und** ein Mittelwert $L_{quer}$ aus allen gemessenen Eigeninduktivitäten bestimmt wird,

**und dass** die Teilleiter zweier zusammenzuschaltender Spulenteile so in Reihe geschaltet werden,

**dass** die Summe der Werte der Eigeninduktivitäten zweier zusammenzuschaltender Teilleiter so gering wie möglich um den Mittelwert $L_{quer}$ streut,

**und dass** in einer Kompensationsstelle (19) diese zusammen zuschaltenden Teilleiter untereinander elektrisch zu einem Teilleiterpaar verschalten werden und

diese Teilleiterpaare gegeneinander und gegen die anderen Wicklungsteile elektrisch isoliert werden.

**3.** Verfahren zur Herstellung einer Wechselstromwicklung mit in Reihe geschalteten Spulengruppen nach Anspruch 1 oder 2,
**dadurch gekennzeichnet,**
**dass** die Schaltstelle der Spulen, die in Reihe zu schalten sind als Kompensationsstelle (19) ausgeführt ist.

**4.** Verfahren zur Herstellung einer Wechselstromwicklung nach Anspruch 1 oder 2,
**dadurch gekennzeichnet,**
**dass** die Spulengruppen oder auch einzelne Spulen in etwa der Mitte der Gesamtlänge aufgetrennt werden und an dieser Stelle je eine Kompensationsstelle (19) ausgeführt ist.

**5.** Verfahren zur Bestimmung der Eigeninduktivitäten der Teilleiter mit einer Messeinrichtung mit einem integrierten Steuerrechner nach Anspruch 1 oder 2,
**dadurch gekennzeichnet,**
**dass** die Teilleiter wenigstens einer Kompensationsstelle (19) gleichzeitig in eine Messbrücke (12) eingelegt und elektrisch kontaktiert sind,
die Eigeninduktivitäten dieser Teilleiter mit einem rechnergestützten Messverfahren messtechnisch bestimmt werden,
die ermittelten Eigeninduktivitäten aller Teilleiter gespeichert und der Größe nach sortiert werden,
in der Messbrücke (12) eine Ermittlung eines Mittelwertes $L_{quer}$ aus allen gemessenen Werten der Eigeninduktivitäten erfolgt,
eine Schaltanweisung generiert und ausgegeben wird.

**Claims**

**1.** A process for manufacturing an alternating current winding for a rotating electrical machine of round wires with a fed-in or pull-in winding,
**characterized in that**,
afterinserting or pulling the winding into the laminated core, the self-inductances of all the sub-conductors of each coil are determined by measurement,
the mean value $L_{transverse}$ is derived from all self-inductances of each coil,
those sub-conductors whose self-inductance is determined to differ significantly from the mean value $L_{transverse}$ are separated in the end winding or in an area accessible after insertion or pulling-in;
the self-inductances of the separated sub-conductors of each coil are determined by measurement,
the self-inductances of the sub-conductorsare sorted according to size,
sothat the sum of the values of the self-inductances of two sub-conductors to be interconnected diverge as little as possible from the mean value $L_{transverse}$, wherein the values of the self-inductances of the unseparatedsub-conductors mustcorrespond closely to the mean value $L_{transverse}$,
and **in that** these sub-conductors to be interconnected are electrically interconnected among themselvesinto a sub-conductor pairin a compensation point (19) and
thesesub-conductor pairs are electrically insulated from one another and from the other winding elements.

**2.** The process for manufacturing an alternating current winding for a rotating electrical machine of round wires with a fed-in or pull-in winding,
**characterized in that**,
after inserting or pulling the winding into the laminated core, all sub-conductors of two coils to be connected in series are, or will be, separated at a place in the end winding or in an area accessible after insertion or pulling-in,
or the natural circuit connections of two coils to be connected in series are used such that the self-inductances of all individual sub-conductors of each coil are determined by measurement, wherein the values of the self-inductances of the sub-conductors are sorted according to size and a mean value $L_{transverse}$ is determined from all the measured self-inductances,
the sub-conductors of two coil elements to be interconnected are connected in series such that the sum of the values of the self-inductances of twosub-conductors to be interconnected diverge as little as possible from the mean value $L_{transverse}$,
and **in that** these sub-conductors to be interconnected are electrically interconnected among themselves into a sub-conductor pairin a compensation point (19) and
these sub-conductor pairs are electrically insulated from one another and from the other winding elements.

**3.** The process for manufacturing an alternating current winding with series-connected coilgroups according to claim 1 or 2,
**characterized in that**
the switching point of the coils, which are to be connected in series, is implemented as a compensation point (19).

**4.** The process for manufacturing an alternating current winding according to claim 1 or 2,
**characterized in that**
the coil groups or also individual coils are separated, around about the centre of the total length, and at this place a compensation point (19) is implemented for each.

5. The process for determining the self-inductances of the sub-conductors with a measuring device with an integrated control processor according to claim 1 or 2,
**characterized in that**
the sub-conductors of at least one compensation point (19) are inserted simultaneously in a measuring bridge (12) and electrical contact is established,
the self-inductances of these sub-conductors are determined with a computer-controlled measurement process,
the self-inductances of all sub-conductors thus determined are stored and sorted according to size,
a determination of a mean value $L_{transverse}$ from all measured values of the self-inductances is carried out,
a connection instruction is generated and output.

**Revendications**

1. Procédé de fabrication d'un enroulement à courant alternatif pour une machine électrique rotative en fils ronds avec un enroulement à fils semés par l'entaille ou d'introduction,
**caractérisé en ce que**
après la mise en place ou l'introduction de l'enroulement dans l'empilage de tôles, les inductances propres de tous les conducteurs partiels de chaque bobine individuelle sont déterminées par une technique de mesure,
une valeur moyenne $L_{transversale}$ de toutes les inductances propres de chaque bobine en découle, les conducteurs partiels dont les inductances propres s'écartent considérablement de la valeur moyenne $L_{transversale}$ seront séparés dans la tête d'enroulement ou une zone accessible après la mise en place ou l'introduction,
les inductances propres des conducteurs partiels séparés de chaque bobine sont déterminées par une technique de mesure,
les inductances propres des conducteurs partiels sont triées en fonction de leur grandeur,
**de telle sorte** que la somme des valeurs des inductances propres de deux conducteurs partiels fonctionnant ensemble
s'éloigne le moins possible de la valeur moyenne $L_{transversale}$,
sachant que les valeurs des inductances propres des conducteurs partiels non séparés doivent correspondre approximativement à la valeur moyenne $L_{transversale}$,
et que, dans une interface de compensation (19), ces conducteurs partiels fonctionnant ensemble sont interconnectés électriquement entre eux pour former une paire de conducteurs partiels et
que ces paires de conducteurs partiels sont isolées électriquement les unes des autres et des autres parties d'enroulement.

2. Procédé de fabrication d'un enroulement à courant alternatif pour une machine électrique rotative en fils ronds avec un enroulement à fils semés par l'entaille ou d'introduction,
**caractérisé en ce que**
après la mise en place ou l'introduction de l'enroulement dans l'empilage de tôles, tous les conducteurs partiels de deux bobines à monter en série seront ou sont séparés à un emplacement dans la tête d'enroulement ou une zone accessible après la mise en place ou l'introduction,
ou que les connexions naturelles de deux bobines à monter en série sont utilisées de telle sorte que les inductances propres de tous les conducteurs partiels individuels de chaque bobine sont déterminées par une technique de mesure,
sachant que les valeurs des inductances propres des conducteurs partiels sont triées en fonction de leur grandeur,
et qu'une valeur moyenne $L_{transversale}$ est déterminée à partir de toutes les inductances propres mesurées,
et **en ce que** les conducteurs partiels de deux parties de bobine fonctionnant ensemble sont montés en série de telle sorte que
la somme des valeurs des inductances propres de deux conducteurs partiels fonctionnant ensemble s'éloigne le moins possible de la valeur moyenne $L_{transversale}$,
et que, dans une interface de compensation (19), ces conducteurs partiels fonctionnant ensemble sont interconnectés électriquement entre eux pour former une paire de conducteurs partiels et que
ces paires de conducteurs partiels sont isolées électriquement les unes des autres et des autres parties d'enroulement.

3. Procédé de fabrication d'un enroulement à courant alternatif avec des groupes de bobines montés en série selon la revendication 1 ou 2,
**caractérisé en ce que**
l'interface de connexion des bobines à monter en série est réalisée comme interface de compensation (19).

4. Procédé de fabrication d'un enroulement à courant alternatif selon la revendication 1 ou 2,
**caractérisé en ce que**
les groupes de bobines ou même des bobines individuelles sont séparées à peu près au milieu de la longueur totale et **en ce qu'**une interface de compensation (19) est réalisée respectivement à cet emplacement.

5. Procédé de détermination des inductances propres des conducteurs partiels avec un dispositif de mesure doté d'un ordinateur de pilotage intégré selon la revendication 1 ou 2,

**caractérisé en ce que**

les conducteurs partiels d'au moins une interface de compensation (19) sont dans le même temps mis en place dans un pont de mesure (12) et en contact électrique,

les inductances propres de ces conducteurs partiels sont déterminées par un procédé de mesure assisté par ordinateur,

les inductances propres calculées de tous les conducteurs partiels sont enregistrées et triées en fonction de leur grandeur,

dans le pont de mesure (12), un calcul d'une valeur moyenne $L_{transversale}$ est réalisé à partir de toutes les valeurs mesurées des inductances propres,

une consigne de connexion est générée et délivrée.

Fig. 1

Fig. 2

Fig.3

Fig.4

Fig. 5

L-R-C Messbrücke

Fig. 6

Fig. 7a

Fig. 7b

1U1 • • 2U1    2U2 • • 1U2

19    A₁ ... Aₙ    E₁ ... Eₙ    19    A₁ ... Aₙ    E₁ ... Eₙ

1    2    6    7    8    12    13

1U1    1U2

19    A₁ ... Aₙ    E₁ ... Eₙ

Fig. 8

1 2 3 4 5 6

15

5

$A_1 \ldots A_{ad}$   $E_1 \ldots E_{ad}$

17

MUX 1   MUX 2

16   18

S1   S1   12

Steuerrechner

L-R-C Messbrücke

Fig. 9

START

Eingabe:     ad

Serien-Induktivitäten Spulenanfang messen
$LA_{k=(1...ad)}$

Umschalter S1 auf Spulenende stellen

Serien-Induktivitäten Spulenende messen
$LE_{k=(1...ad)}$

Sortieren der Indizes der Induktivitäten des
Spulenanfangs $LA_k$ beginnend mit der **größten**
Induktivität:  $a_i$=k mit i=1,2…ad

Sortieren der Indizes der Induktivitäten des
Spulenendes $LE_k$ beginnend mit der **kleinsten**
Induktivität:  $e_i$=k mit i=1,2…ad

i: = 1

**AUSGABE:**
Verbindungsanweisung
Teilleiter **$a_i$ mit $e_i$**

i: = i+1

QUITTIEREN

nein

i > ad

STOPP

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1488676 A1
- DE 427006 C
- GB 1219875 A

**In der Beschreibung aufgeführte Nicht-Patentliteratur**

- **RICHTER.** R. Elektrische Maschinen. Verlag Birkhäuser, 1967